# EUROPEAN PATENT APPLICATION

(11) **EP 1 746 519 A1**
(43) Date of publication of application: **24.01.2007**
(21) Application number: 05300609.4
(22) Date of filing: 21.07.2005
(51) Int. Cl.: G06F 17/30

(54) **Establishing a communication from a hypermedia document**

(71) Applicant: ALCATEL, 75008 Paris (FR)
(72) Inventor: Rössler, Horst, 70794 Filderstadt (DE); Szabo, Peter Dr., 75180 Pforzheim (DE); Hoche, Michael, Dr., 88090 Immenstaad (DE)
(74) Representative: Brose, Gerhard

(57) **Abstract**

The invention relates to a method for integrating a streamed media connection within a hypermedia document. The method comprising the step of describing a hypermedia document by specifying hypermedia objects and their relations for rendering a hypermedia information by a browser at a client, where a hypermedia object is a generic designation object like a link for establishing a streamed media communication, and in that when the object is designated on the rendered hypermedia information this object is interpreted by the client as a request to establish or participate at the streamed media communication and if necessary the object is interpreted with respect to the client's communication capabilities for rendering the streamed media communication. The invention relates to a computer software product for establishing a streamed media communication from a rendered hypermedia document.

## Description

The present invention relates to a method for integrating a streamed media connection within a hypermedia document. The invention also relates to a computer software product.

Hypermedia, today realized usually bundled using hypertext mark-up language (HTML) comprises a manifold of media, interactive media such as buttons, applet, Links etc. some non interactive like graphics or formatted text, and even some continuous media also called streamed media like video or audio streams. Full information about HTML could be found at the "HyperText Markup Language Home Page" http://www.w3.org/MarkUp/ and there is even a trend in making this language extensible, see the "Extensible HyperText Markup Language".

What separates HTML from most other mark-up languages is its features for hypertext and interactive documents where a link (or hyperlink, or Web link) is the basic hypertext construct. A link is a connection from one Web resource to another. A link has two ends -- called anchors -- and a direction. The link starts at the "source" anchor and points to the "destination" anchor, which may be any Web resource, e.g., an image, a video clip, a sound bite, a program, an HTML document, an element within an HTML document, etc, and even an interactive streamed media connection. The default behaviour associated with a link is the retrieval of another Web resource. This behaviour is commonly and implicitly obtained by selecting the link, e.g., by clicking, through keyboard input, etc.

The HTML interlinking is described at http://www.w3.org/TR/html4/struct/links.html, where especially the "A" element and the "LINK" element are specified. These elements comprising especially the "href" attribute, which specifies the location of a Web resource by a uniform resource locator (URL), thus defining a link between the current element (the source anchor) and the destination anchor defined by this attribute.

The Naming and Addressing: URIs (uniform resource identifier), URLs (uniform resource locator), ... is described at http://www.w3.org/Addressing/ . The generic URI syntax consists of a hierarchical sequence of components referred to as the scheme, authority, path, query, and fragment.

**Table 1**

| | |
|---|---|
| URI = scheme ":" hier-part [ "?" query ] [ "#" fragment ] | |
| | hier-part = "//" authority path-abempty |
| | / path-absolute |
| | / path-rootless |
| | / path-empty |

Well-known examples are for instance
ftp://ftp.is.co.za/rfc/rfc1808.txt
http://www.ietf.org/rfc/rfc2396.txt
Idap://[2001:db8::7]/c=GB?objectClass?one
mailto:John.Doe@example.com
news:comp.infosystems.www.servers.unix
tel:+1-816-555-1212
telnet://192.0.2.16:80/

The schemes "http", "Idap", etc. are well established. For the upcoming voice over Internet Protocol (VoIP) technique there are several interoperability problems to solve. Currently there are several incompatible voice communication applications each maintaining their own community dictionary. NetMeeting for instance uses the "CallTo" scheme to place an outgoing call. Placing a call directly to another individual that accepts the call creates a new conference and the local user is the top provider.

The "CallTo" URL syntax, introduced in NetMeeting 3, allows specifying an extensible address for placing all forms of NetMeeting calls from a HTML page. Examples of complete "CallTo" syntax are shown following in the context of each calling mode. Calls can be placed in these ways: Directly by host name or IP address, through a directory server, through a gateway, and through a gatekeeper.

The following table gives examples of these modes, as they would be specified in a Web page using the callto method on the NetMeeting object.
callto: 192.168.103.77+type=ip
callto:someone@example.com+type=directory
callto:msils/someone@example.com+type=directory
callto:msils:1002/someone@example.com+type=directory
callto: 12345+type=phone
callto: 12345+gateway=fusion+type=phone
callto:someone@example.com
callto: 12345+type=phone

Similarly a HTML fragment like
<a href="callto://name"><img
src="http://goodies.skype.com/graphics/skypeme_btn_small_green.gif"
border="0"></a>

would be rendered by a web browser to an image and when designating and selecting the image or say button, it would launch a the Skype application and place a call to a person with the Skype user name "name" resolved by the active peer-to-peer network.

This manifold of voice communication applications could not be tightly integrated using a common URI since Net meeting and Skype and even the tel scheme would require at least a kind of media gateway for inter-network communication.

A way out of this dilemma in order to provide a uniform hypermedia dictionary of voice connection resources is a method for integrating a call or more generally a streamed media connection within a hypermedia document the method comprising the step of describing a hypermedia document by specifying hypermedia objects and their relations for rendering a hypermedia information by a browser at a client, where a hypermedia object is a generic designation object like a link for establishing a streamed media communication, and in that when the object is designated on the rendered hypermedia information this object is interpreted by the client as a request to establish or participate at the streamed media communication and if necessary the object is interpreted with respect to the client's communication capabilities for rendering the streamed media communication.

The problem is solved inter alia by a computer software product comprising programming means for establishing a streamed media communication from a rendered hypermedia document comprising a description of hypermedia objects and their relations for rendering hypermedia information, where a hypermedia object is a generic designation object like a link for establishing a streamed media communication, and in that when the object is designated on the rendered hypermedia information this object is interpreted by the client as a request to establish or participate at the streamed media communication and if necessary the object is interpreted with respect to the client's communication capabilities for rendering the streamed media communication.

This has the advantage that generic designation object provides a seamless integration of VolP on the GUI level for services and applications. The search engine technique in connection with this information provides a new quality of yellow pages. Especially the re-usage of the Internet infrastructure is an advantage against the usual telephone book databases. And the propagation and easier access of IP telephony develops a new telecommunication market and provides a new class of information network for a user.

Integration of VoIP technology with other services suffers from dedicated and inefficient presentation integration. A scheme of an URI for (not only but also interactive) streamed media communication is form instance a VoIP phone number or more generally a session initialization protocol uniform resource identifier (SIP URI) that identifies (uniquely) a SIP user client anywhere in the world via dynamic delegation discovery system for SIP URIs. Current Yellow Pages (telephone directories) are not integrated in today's search engines. There are two worlds one for the streamed media communication and one for the hypermedia reference.

When for instance seeking for telephone numbers in the Internet, it is necessary to represent a telephone link textual. There is no tight integration within a web document. This requires search intelligence like the provided separate yellow page dictionaries.

Current integration of VolP and connection management is an application-specific telephone directory. For efficient integration within a browser a new "PhoneTo" tag similar to the "EmailTo" html tag is suggested as tight integration of voice and hypermedia. A browser-based service may place a "Call link" next to a telephone number or SIP URI using this "PhoneTo" tag similar to the "EmailTo" html tag. To initiate a SIP-based VoIP call a click on the link triggers either an already installed soft-phone client (e.g. Skype) or third-party SIP client, such as Xten or even a browser plug-in like flash. Since the "PhoneTo" tag is a specific link, it can be combined with other hyper media objects to serve as context for an enhanced telephone directory.

The objects of the invention are carried out in the following by comparing the traditional applied technologies and the methods according to the invention, and how their application will result in a computer software product according to the invention. Therefore
Fig. 1 shows a schematic drawing of the integration according to prior art
Fig. 2 shows a schematic drawing illustrating the integration used for the method according to the invention

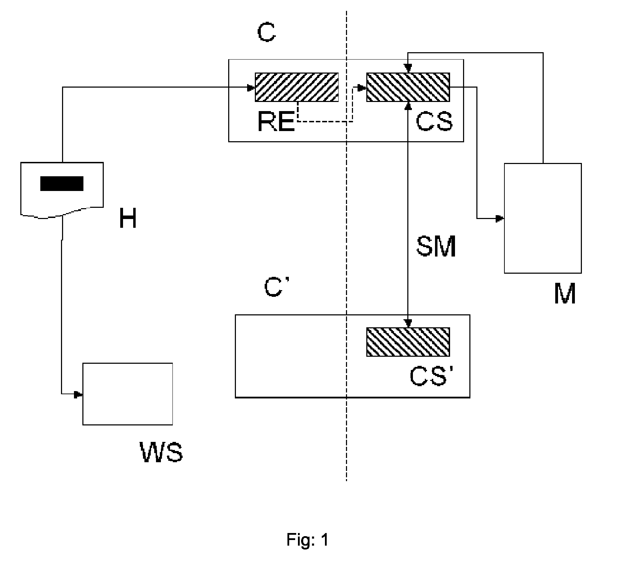

Fig. 1 shows a web server WS that provides a HTML page H, the page contains a link to a real time streamed media communication resource, a VoIP resource say. Other example might be a video conferencing, interactive television, or any kind of streamed media. This link is depicted by the black filled rectangle. The content of the HTML page H us rendered by a rendering engine ER at a client C. This client might be a Internet browser running e.g. on an PC. When the user of requests the rendered resource, i.e. wants to inspect the link, a VoIP connection should be established. Therefore a communication software CS is triggered, i.e. started or activated, as shown by the dashed arrow.

This communication software CS establishes a VoIP connection to another communication software CS, which might another peer-to-peer communicator in order to exchange streamed media SM. In the example this streamed media could be transmitted over the Internet, too.

Nevertheless for establishing the connection some additional steps are necessary. First the communication software has to look-up the connection parameters, e.g. a SIP address, a telephone number etc. at a mediator. This mediator M might even integrated in the both communication software CS, CS'. And then the communication could be set up, e.g. also via a mediator M for signalling like a SIP server or a call server.

The both worlds on the one side the hyper media infrastructure comprising the web server WS and the web client C with the rendering engine, and on the other side the streamed media communication infrastructure with the communication software CS, CS' and the mediating device(s) M are strictly separated which could lead to e.g. discrepancies between the links at the HTML pages to streamed media communication resources, that are also maintained in the mediator M. The both worlds merely seem to share the Internet as common resource. Even the binding defined by communication resource descriptor, i.e. the scheme is maintained at the client C. This has the effect that a client, which has installed e.g. Skype (with the "CallTo" binding to the Skype application) is not able to establish correctly a call to an communication resource requiring a NetMeeting connection.

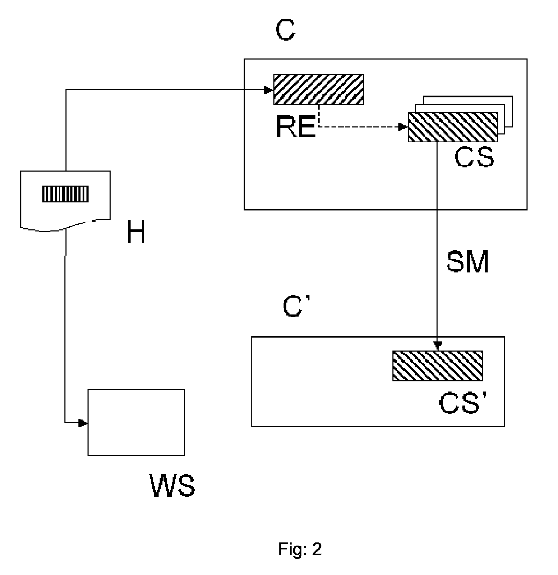

These incompatibility problems and the consistence problems that origin in a duplicate source for resource descriptors and ambiguities in schemes are overcome by the integration shown in Fig 2. There the web server WS also provides a HTML page H, but now with a generic designation object like a link for establishing a streamed media communication. This link object, shown as a vertically hatched rectangle, is rendered at the client C by the rendering engine as links are usual are. When the object is designated, i.e. the user clicks on the link, the object is interpreted by the client as a generic request to establish or participate at the streamed media communication SM. Therefore the client has to verify the availability of several protocols, applications, services, etc. that could match to the communication request using the provided parameters. Once the verifications has terminated and the communication between the two communication software CS and CS' could be established, a suitable communication protocol and or software is used.

A format for such a generic designation object might look like
<a
href="Xto://Y@Z+X=sip_or_email_or_Skype_or_chat+gateway=node1_or
_node2+Y=name_or_alias1_or alias2+Z=pc1_or_pc2_or_mobile"
Communicate with Name </a>

This format enables a client to explore connection possibilities, which enhances the reachability. Beside that remains the reachability information transparent to the hypermedia source, i.e. the visual on the HTML page H, i.e. rendered to e.g. the usual link syntax
Communicate with Name

This object is also searchable via web bots, crawlers, or search engines and not transparent to these tools, i.e. hidden at separate information structures.

The generic designation object and the client's communication capabilities might even provide alternative suitable streamed media communications. This freedom of choice requires a selection. For instance alternative streamed media communication could be treated and once one is found a communication is successfully established and the problem is solved. The selection between the alternative streamed media communications might be based on preferences of the caller or the callee or might even be based on referenced (e.g. within the object) presence information of a communication party. When a party is already in a call, the callee might join the already established ongoing communication.

To summarize the concept is a concentration of connectivity information inside hypermedia that allows a client to adapt itself to explored streamed media communication capabilities that are available and possible.

Preferably a hierarchy of communication services is established via a connection URI initiating e.g. first an voice connection via the internet and instantaneously an shared browser view as disclosed in a forthcoming European patent application disclosing a method for sharing a hypermedia document presentation in a browser context. This sharing is made establishing a common presentation context and exchanging continuously interaction events between clients within the common presentation context where a client has its own replica of the shared presentation context within a browser and the interactions are coordinated by emulating the coordinated interaction events in the replica of the shared presentation context at a client.

This alignment of the clients' configuration is enhanced by the lazy binding of foreign applications of the generic designation object and allows realizing searchable hypermedia documents realizing yellow pages or telephone directories comprising references to all kind of communication links.

It allows dynamically initiated by the designation and selection of a hyperlink to initiate a communication with suitable communication links that are dynamically explored and available.

## Claims

1. A **method** for integrating a streamed media connection within a hypermedia document, the method comprising the step of describing a hypermedia document by specifying hypermedia objects and their relations for rendering a hypermedia information by a browser at a client, **characterized in that**, a hypermedia object is a generic designation object like a link for establishing a streamed media communication, and **in that** when the object is designated on the rendered hypermedia information this object is interpreted by the client as a request to establish or participate at the streamed media communication and if necessary the object is interpreted with respect to the client's communication capabilities for rendering the streamed media communication.

2. The method according to claim 1, **characterized in that** the generic designation object and the client's communication capabilities provide alternative streamed media communications and one is streamed media communication by treating at least two of them.

3. The method according to claim 2, **characterized in that** a selection between the alternative streamed media communications is based on presence information of a communication party, like an joining an already established ongoing communication or a preferred media communication e.g. video conferencing.

4. The method according to claim 1, **characterized in that** a converter or gateway is chosen in order to overcome incompatibilities of communication software or communication networks.

5. A **computer software product** comprising programming means for establishing a streamed media communication from a rendered hypermedia document comprising a description of hypermedia objects and their relations for rendering hypermedia information, **characterized in that** a hypermedia object is a generic designation object like a link for establishing a streamed media communication, and **in that** when the object is designated on the rendered hypermedia information this object is interpreted by the client as a request to establish or participate at the streamed media communication and if necessary the object is interpreted with respect to the client's communication capabilities for rendering the streamed media communication.
